# FASCICULE DE BREVET EUROPEEN

(11) **EP 3 475 036 B1**
(45) Date de publication et mention de la délivrance du brevet: **08.01.2020**
(21) Numéro de dépôt: 18759892.5
(22) Date de dépôt: 16.08.2018
(51) Int. Cl.: B25J 13/08, B25J 19/02, B25J 19/06

(54) **DISPOSITIF DE DÉTECTION MULTI-DISTANCES POUR UN ROBOT, ET ROBOT EQUIPÉ DE TEL(S) DISPOSITIF(S)**
VORRICHTUNG ZUR ERFASSUNG MEHRERER ENTFERNUNGEN FÜR EINEN ROBOTER UND MIT EINER ODER MEHREREN SOLCHER VORRICHTUNGEN AUSGESTATTETER ROBOTER
MULTI-DISTANCE DETECTION DEVICE FOR A ROBOT, AND ROBOT FITTED WITH ONE OR MORE SUCH DEVICES

(30) Priorité: 28.08.2017 FR 1757915
(43) Date de publication de la demande: 01.05.2019
(73) Titulaire: Fogale Nanotech, 30900 Nîmes (FR)
(72) Inventeur: ROZIERE, Didier, 30900 Nîmes (FR); COURTEVILLE, Alain, 30111 Congenies (FR)
(74) Mandataire: IPAZ
(86) Numéro de dépôt international: PCT/EP2018/072248
(87) Numéro de publication internationale: WO 2019/042784

(56) Documents cités:
- EP-A1- 0 518 836
- EP-A1- 2 834 049
- WO-A1-2010/072193
- WO-A2-2012/091807
- US-A1- 2006 217 838
- US-A1- 2010 256 814
- US-A1- 2011 067 504

## Description

### Domaine technique

La présente invention concerne un dispositif de détection d'objet pour un robot. Elle concerne également un robot muni de tel(s) dispositif(s) de détection d'objet.

Le domaine de l'invention est, de manière non limitative, celui du domaine de la robotique, en particulier le domaine de la robotique industrielle ou des robots de service, par exemple médical ou domestique, ou encore des robots collaboratifs, également appelés « cobots ».

### Etat de la technique

Les robots industriels ou domestiques, en particulier les cobots, comprennent généralement un corps sur lequel est fixée une tête fonctionnelle, se présentant sous la forme d'un outil ou d'un porte-outil, leur permettant d'accomplir une ou plusieurs tâches.

Pour pouvoir utiliser ou faire évoluer un robot ou co-bot, tel que par exemple un bras robotisé, dans un environnement comprenant des humains et/ou des objets, il est nécessaire de le doter d'une capacité de détection permettant d'une part d'éviter des collisions avec les objets/humains environnants et d'autre part de détecter les objets/humains suffisamment tôt pour pouvoir adapter sa trajectoire. US2010/256814 A1 et EP0518836 A1 présentent des exemples de détection de proximité et/ou d'approche pour des robots.

On connait des capteurs de petites dimensions et de faible coût, tels que des capteurs capacitifs, pour équiper un robot. Ces capteurs présentent une portée courte et ne permettant pas une détection d'objets suffisamment tôt pour réaliser une adaptation de trajectoire.

On connait aussi des capteurs plus volumineux et plus coûteux proposant une portée de détection plus grande, tels que des capteurs à temps de vol, des capteurs optiques, etc. Cependant, ces capteurs présentent une ouverture de détection relativement faible, de l'ordre de 60° maximum, laissant des zones aveugles. Pour diminuer ces zones aveugles, il faudrait multiplier le nombre de capteurs, ce qui n'est pas envisageable compte-tenu du coût et de l'encombrement de ces capteurs. En outre, ces capteurs ne permettent pas en général une détection d'objets à très courte distance ou en contact du fait de leur étendue de mesure.

Ainsi, du fait de l'existence des zones aveugles et des limites de détection, ces capteurs ne sont pas bien adaptés pour des applications de sécurité anticollision.

Un but de la présente invention est de proposer un dispositif de détection pour robot proposant une meilleure détection d'objets, tout en présentant un coût et un encombrement acceptables.

Un autre but de la présente invention est de proposer un dispositif de détection pour robot présentant un coût et un encombrement acceptables et permettant de réaliser une détection à la fois d'objets proches et d'objets lointains, avec moins, voire pas, de zones aveugles.

Un autre but de la présente invention est de proposer un dispositif de détection pour robot permettant de réaliser une détection d'objets dans un voisinage du robot avec une sûreté de détection suffisante pour pouvoir être utilisé comme dispositif de sécurité anticollision.

Encore un autre but de la présente invention est de proposer un dispositif de détection pour robot permettant à la fois une adaptation de trajectoire et une détection de contact.

### Exposé de l'invention

Au moins un de ces buts est atteint avec un dispositif de détection d'objets pour un robot, selon la revendication 1, prévu pour équiper ledit robot, comprenant entre autres :
- au moins un capteur, dit d'approche, mettant en œuvre une première technologie de détection pour détecter un objet environnant ; et
- au moins un capteur, dit de proximité, mettant en œuvre une deuxième technologie de détection pour détecter un objet environnant, différente de ladite première technologie, et de portée inférieure à la portée dudit au moins un capteur d'approche.

Ainsi, le dispositif de détection selon l'invention propose de réaliser une détection d'objets par une combinaison de deux types de capteurs proposant des portées différentes.

Les capteurs d'approche, généralement coûteux et encombrants, réalisent une détection d'objets à une plus grande distance et permettent une adaptation de trajectoire. En combinaison avec ces capteurs d'approche, des capteurs de proximité de portée plus faible sont utilisés pour couvrir les zones aveugles non-couvertes par les capteurs d'approche, à une plus petite distance, et permettent une détection de contact, pour par exemple déclencher un arrêt ou un évitement d'urgence, ou encore changer la compliance du robot ou effectuer une commande tactile ....

Les capteurs de proximité sont moins coûteux et moins encombrants comparés aux capteurs d'approche. Ainsi, le dispositif de détection permet une meilleure détection d'objets, tout en présentant un coût et un encombrement acceptables. Il permet de réaliser une adaptation de trajectoire et une détection de contact avec très peu, voire sans, zone aveugle.

Ainsi, le dispositif de détection selon l'invention est compatible avec les exigences de sûreté de détection requises pour pouvoir être utilisé comme dispositif de sécurité anticollision, en particulier vis-à-vis d'opérateurs humains évoluant à proximité du robot.

Dans la présente demande, deux potentiels alternatifs sont identiques à une fréquence donnée lorsqu'ils comportent chacun une composante alternative identique à cette fréquence. Ainsi, l'un au moins des deux potentiels identiques à ladite fréquence peut comporter en outre une composante continue, et/ou une composante alternative de fréquence différente de ladite fréquence donnée.

De manière similaire, deux potentiels alternatifs sont différents à la fréquence de travail lorsqu'ils ne comportent pas de composante alternative identique à cette fréquence de travail.

Dans la présente demande, le terme « potentiel de masse » ou « potentiel de masse générale » désigne un potentiel de référence de l'électronique, du robot ou de son environnement, qui peut être par exemple une masse électrique ou un potentiel de masse. Ce potentiel de masse peut correspondre à un potentiel de terre, ou à un autre potentiel relié ou non au potentiel de terre.

On rappelle par ailleurs que de manière générale, les objets qui ne sont pas en contact électrique direct avec un potentiel électrique particulier (objets électriquement flottants) tendent à se polariser par couplage capacitif au potentiel électrique d'autres objets présents dans leur environnement, tel que par exemple la terre ou des électrodes, si les surfaces de recouvrement entre ces objets et ceux de l'environnement (ou les électrodes) sont suffisamment importantes.

Dans la présente demande, « objet » désigne tout objet ou personne pouvant se trouver dans l'environnement du robot.

Par « robot », on entend tout système robotisé, et en particulier un bras robotisé, un véhicule sur roues tel qu'un chariot muni d'un bras ou d'un système manipulateur, ou un robot de type humanoïde ou pourvu d'organes de déplacement tels que des membres.

Suivant une caractéristique avantageuse, au moins un capteur d'approche peut réaliser une détection d'un objet jusqu'à une distance au moins égale à 30cm, en particulier jusqu'à une distance au moins égale à 50cm.

Suivant les technologies mises en œuvre, un capteur d'approche peut par exemple réaliser une détection d'un objet à des distances comprises entre une distance minimale de quelques centimètres et une distance maximale de quelques dizaines de centimètres, ou quelques mètres. En général la détection d'un objet ou au moins la mesure de sa distance n'est pas possible en dessous de la distance minimale.

Ainsi, le capteur d'approche peut détecter un objet lorsqu'il est relativement loin du robot, ce qui laisse au robot le temps de modifier/ajuster sa trajectoire en vue d'éviter ledit objet, tout en continuant à assurer la tâche qu'il est en train d'effectuer, par exemple.

Suivant une autre caractéristique avantageuse, au moins un capteur d'approche peut réaliser une détection à une fréquence au moins égale à 10Hz. Idéalement, un capteur d'approche peut réaliser une détection jusqu'à une fréquence de 100Hz, ou plus.

Une telle fréquence de mesure pour détecter un objet, lorsque ce dernier est loin du robot, est suffisante pour ajuster/modifier la trajectoire du robot.

Selon l'invention, au moins un capteur d'approche peut être formé par l'un quelconque des capteurs suivants :
- un capteur à temps de vol ou un télémètre, optique ou acoustique,
- une caméra à temps de vol (3D),
- un dispositif optique stéréoscopique et/ou à projection de lumière structurée, ou
- un dispositif d'imagerie optique.

Ainsi, à titre d'exemples non limitatifs, les capteurs d'approche peuvent comprendre :
- des capteurs à temps de vol à ultrasons (SODAR). Ces capteurs ont une résolution centimétrique et peuvent mesurer des distances à des objets présents dans un cône de détection dans l'axe du capteur (par exemple de 50 degrés d'angle), entre une distance minimale (par exemple 20cm) et une distance maximale (par exemple de 1m ou plus) ;
- des capteurs optiques à temps de vol (LIDAR). Ces capteurs ont également une résolution centimétrique et peuvent mesurer des distances à des objets présents dans un cône de détection dans l'axe du capteur (par exemple de quelques degrés à quelques dizaines de degrés d'angle), entre une distance minimale (par exemple 10cm) et une distance maximale (qui peut être de l'ordre de plusieurs mètres) ;
- des caméras à temps de vol qui appliquent le même principe optique de détection par temps de vol avec un capteur d'imagerie. Ces capteurs peuvent mesurer des distances à des objets présents dans un champ de vue dans l'axe du capteur (par exemple de quelques dizaines de degrés d'angle), entre une distance minimale (par exemple 50cm) et une distance maximale (qui peut être de l'ordre de plusieurs mètres) ;
- des capteurs optiques qui utilisent une projection de lumière structurée, ou des capteurs basés sur la stéréovision. Ces deux principes de capteurs ont en commun de permettre de mesurer une distance à un objet présent dans une zone d'intersection entre soit un faisceau d'illumination et un champ de vue, soit deux champs de vue ;
- des capteurs d'imagerie, qui permettent par segmentation d'images, d'identifier la présence d'un objet dans leur champ de vue.

Avantageusement, au moins un capteur de proximité peut réaliser une détection d'un objet jusqu'à une distance au moins égale à 10cm, ou idéalement 20cm ou 30cm.

Ainsi, l'au moins un capteur de proximité peut détecter un objet lorsque celui-ci se trouve en contact avec le capteur, ou à une distance pouvant aller jusqu'à au moins 10 cm, ou idéalement au moins 20cm ou 30cm. Ainsi, le capteur de proximité présente une gamme de mesures de distances complémentaires, ainsi qu'un encombrement réduit et un coût réduit, comparé aux capteurs d'approche.

De plus, au moins un capteur de proximité peut réaliser une détection à une fréquence au moins égale à 100Hz, ou idéalement au moins égale à 500 Hz ou 1000Hz.

Une telle fréquence de mesure est particulièrement adaptée à la détection d'objets très proches du robot, tout en laissant suffisamment de temps pour que le robot se mette en arrêt avant d'entrer en collision.

Cette fréquence de mesure est suffisante pour assurer la sécurité anticollision pour un robot tout en utilisant des capteurs de proximité de coût et d'encombrement acceptables.

Suivant l'invention, au moins un, en particulier chaque, capteur de proximité peut être un capteur capacitif comprenant au moins une électrode de mesure polarisée à un premier potentiel électrique alternatif différent d'un potentiel de masse générale, à une fréquence de travail.

Les capteurs capacitifs sont particulièrement adaptés pour assurer une détection d'objets à faible distance (inférieure à 20-30cm), ou en contact, avec une fréquence de mesure suffisante pour assurer une sécurité anticollision, tout en présentant un coût et un encombrement très réduits. De plus, l'équipement d'un robot avec des capteurs capacitifs peut être réalisé de manière rapide, simple et sans, ou avec très peu de, modification de l'architecture du robot.

Dans un mode de réalisation préféré, le dispositif de détection peut comprendre une électrode, ou une surface, dite de garde, pour garder au moins une électrode de mesure, et polarisée à un potentiel électrique alternatif (V_{G}), dit de garde, identique ou sensiblement identique au premier potentiel électrique alternatif, à la fréquence de travail.

Une telle électrode de garde permet de protéger l'électrode de mesure capacitive des perturbations externes, telles que des capacités de fuite, et ainsi d'augmenter la portée et la précision de l'électrode de mesure.

Toujours suivant l'invention, au moins un, en particulier chaque, capteur d'approche peut préférentiellement être référencé au potentiel de garde (V_{G}). Ainsi, le ou chaque capteur d'approche n'est pas détecté par la ou les électrodes de mesure, et ne viennent pas perturber la détection.

Pour ce faire, le dispositif selon l'invention peut comprendre au moins un convertisseur électrique agencé pour :
- recevoir au moins un signal électrique, dit d'entrée, tel qu'un signal d'alimentation ou de commande référencé par exemple à un potentiel de masse et destiné à au moins un capteur d'approche, et référencer ledit signal d'entrée au potentiel de garde (V_{G}) ; et/ou
- recevoir au moins un signal électrique, dit de sortie, émis par ledit au moins un capteur d'approche, et référencer ledit signal de sortie au potentiel de masse électrique d'un contrôleur auquel il est destiné.

Ainsi, le capteur d'approche du dispositif selon l'invention est globalement référencé au potentiel de garde et ne perturbe donc pas les capteurs capacitifs.

Suivant des exemples de réalisation, un tel convertisseur électrique peut comprendre au moins l'un des éléments suivants :
- au moins une alimentation à isolation galvanique, telle qu'un convertisseur DC/DC, en particulier pour générer un signal d'entrée d'alimentation pour au moins un capteur d'approche ;
- au moins une interface électrique sans contact galvanique, de type capacitive ou par opto-coupleur, pour au moins un signal d'entrée de commande, ou au moins un signal de sortie ; et/ou
- une ou plusieurs inductances à impédance élevée pour recevoir et transmettre au moins un signal d'entrée ou au moins un signal de sortie.

Avantageusement, au moins un, ou un ensemble de plusieurs, capteur(s) de proximité peut être positionné entre au moins deux capteurs d'approche de sorte que sa zone de détection couvre une zone non-couverte par lesdits capteurs d'approche, et ce dans au moins une direction, et en particulier dans la direction reliant lesdits deux capteurs d'approche entre eux.

En particulier, si la zone couverte par les capteurs d'approche a une forme de conique tronquée, avec un angle d'ouverture et une distance de détection minimale, le ou les capteurs de proximité peuvent avantageusement être positionnés entre les capteurs d'approche de sorte que leurs zones de détection couvrent une zone entre les zones couvertes par les capteurs d'approche, et/ou entre ces zones couvertes et les capteurs d'approche correspondants.

Ainsi, le dispositif de détection selon l'invention permet de couvrir plus d'espace lors de la détection d'objets et diminuer les zones aveugles.

De plus, au moins un capteur d'approche peut être positionné de sorte que sa zone de détection se chevauche, au moins partiellement, avec une zone de détection d'un, ou d'un ensemble de plusieurs, capteur(s) de proximité, et ce dans au moins une direction, et en particulier dans la direction reliant lesdits capteur(s) de contact et d'approche.

Dans ce mode de réalisation, il n'existe pas de zone aveugle entre un capteur d'approche et un capteur de proximité, ce qui améliore encore plus la détection d'objets par le dispositif selon l'invention.

Préférentiellement, au moins deux capteurs d'approche peuvent être positionnés de sorte que leurs zones de détection se chevauchent, au moins partiellement entre-elles.

Au moins deux capteurs d'approche peuvent également être positionnés de sorte que :
- leurs zones de détection se chevauchent entre-elles, par exemple au-delà d'une distance de recouvrement, et
- la partie commune de leurs zones de détection chevauche avec une zone de détection d'un, ou d'un ensemble de plusieurs, capteur(s) de proximité ;
et ce dans au moins une direction, en particulier dans la direction reliant lesdits deux capteurs d'approche.

Dans ce mode de réalisation, il n'existe aucune zone aveugle entre les capteurs d'approche, ou au moins aucune zone aveugle au-delà de la distance de recouvrement le cas échéant.

Suivant un autre aspect de la même invention, il est proposé un élément d'habillage pour robot équipé d'au moins un dispositif de détection selon l'invention.

Un tel élément d'habillage peut se présenter sous la forme d'un revêtement souple formant une peau.

Un tel élément d'habillage peut se présenter sous la forme d'une coque souple ou rigide.

Un tel élément d'habillage peut être utilisé à la place d'un élément d'habillage existant d'un robot.

Un tel élément d'habillage peut être utilisé en plus d'un élément d'habillage existant d'un robot. Dans ce cas, l'élément d'habillage selon l'invention peut être disposé sur ledit élément d'habillage existant, sous la forme d'un élément de garniture ou d'une deuxième coque, ou encore d'un revêtement.

Suivant encore un autre aspect de la présente invention, il est proposé un robot équipé :
- d'au moins un dispositif de détection selon l'invention ; et/ou
- d'un élément d'habillage selon l'invention, en plus ou à la place d'un élément d'habillage existant.

Le robot selon l'invention peut comprendre, pour au moins un segment dudit robot :
- une pluralité de capteurs de proximité, distribués sur ledit segment du robot, et
- une pluralité de capteurs d'approche, par exemple disposés au niveau d'au moins une, et en particulier de chacune des extrémités dudit segment.

Le robot selon l'invention peut être équipé d'une tête fonctionnelle, formant un outil ou un porte-outil.

Dans un mode de réalisation nullement limitatif, ladite tête fonctionnelle peut être utilisée comme électrode de détection capacitive, ou électrode de mesure. Pour ce faire, la tête fonctionnelle est isolée du reste du robot et polarisée au premier potentiel alternatif. La tête fonctionnelle peut être isolée du reste du robot par une surface isolante insérée entre ladite tête fonctionnelle et le reste du robot.

Dans ce cas, la tête fonctionnelle peut en outre être équipée d'au moins un capteur d'approche, en particulier de plusieurs capteurs d'approche disposés de part et d'autre de ladite fonctionnelle, par exemple sous la forme d'un anneau.

Optionnellement, il peut être prévu une surface de garde, polarisée au potentiel de garde (V_{G}), pour garder ladite tête fonctionnelle utilisée comme électrode capacitive. Une telle surface de garde peut être insérée entre ladite tête fonctionnelle et le reste du robot, tout en étant isolée à la fois de la tête fonctionnelle et du reste du robot.

Suivant un autre aspect de la même invention, il est proposé un procédé de contrôle de trajectoire pour un robot selon l'invention, ledit procédé comprenant une étape de génération, ou de modification, d'une trajectoire d'au moins une partie dudit robot en fonction
- d'au moins un signal fourni par au moins un capteur d'approche, et
- d'au moins un signal fourni par au moins un capteur de proximité.

Lorsque l'objet est détecté par un capteur d'approche sans être détecté par un capteur de proximité cela veut dire que l'objet est suffisamment loin pour réaliser un évitement. Dans ce cas, la trajectoire du robot (ou d'une tête mobile du robot) est générée/modifiée globalement, et/ou de manière optimisée, pour éviter ledit objet.

Lorsque l'objet est détecté par un capteur de proximité, cela veut dire que l'objet est très proche du robot et qu'il y a plus de temps pour réaliser un évitement. Dans ce cas, la trajectoire du robot est modifiée pour provoquer un arrêt du robot, ou un évitement à courte distance.

### Description des figures et modes de réalisation

D'autres avantages et caractéristiques apparaîtront à l'examen de la description détaillée d'exemples nullement limitatifs, et des dessins annexés sur lesquels :
- les FIGURES 1 et 2 sont des représentations schématiques de deux exemples non limitatifs du principe d'un dispositif de détection selon l'invention ;
- la FIGURE 3 est une représentation schématique d'un exemple de réalisation non limitatif d'un robot équipé de deux dispositifs de détection selon l'invention ;
- la FIGURE 4 est une représentation schématique, en coupe, d'un dispositif de détection équipant le robot de la FIGURE 3 ;
- les FIGURE 5 et 6 sont des représentations schématiques de deux exemples d'électronique pouvant être mise en œuvre dans un dispositif de détection selon l'invention ; et
- la FIGURE 7 est une représentation schématique d'un exemple de réalisation non limitatif d'une tête fonctionnelle pouvant équiper un robot selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

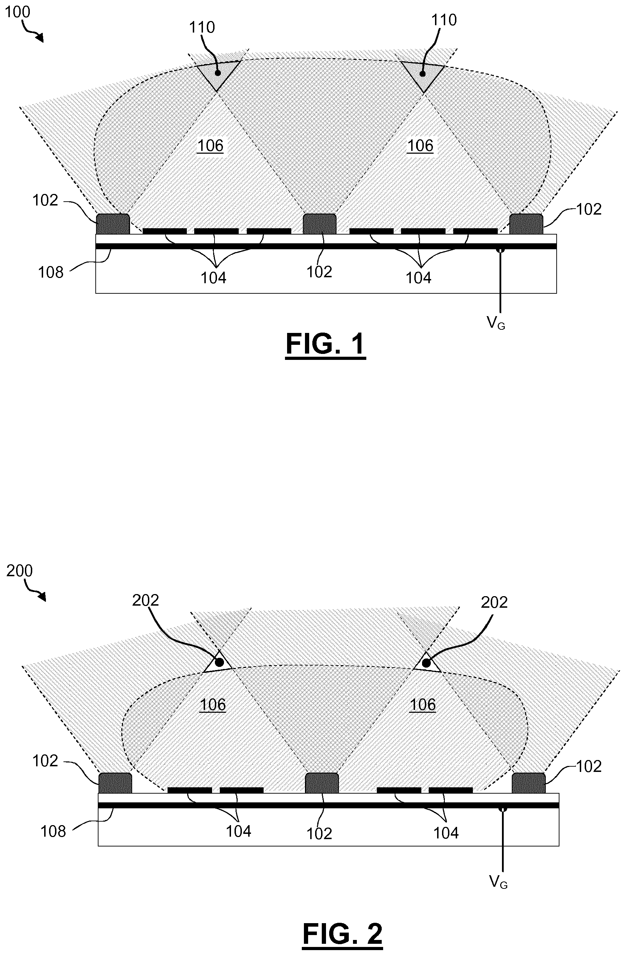

La FIGURE 1 est une représentation schématique d'un exemple non limitatif du principe d'un dispositif de détection selon l'invention.

Le dispositif de détection 100 de la FIGURE 1 comprend des capteurs 102, dits d'approche, et des capteurs 104, dits de proximité.

Sur la FIGURE 1, sont représentés trois capteurs d'approche 102 et six capteurs de proximité 104, avec trois capteurs de proximité 104 entre deux capteurs d'approche 102 consécutifs.

Les capteurs d'approche 102 présentent une portée en détection plus grande comparée à celle des capteurs de proximité 104.

Les capteurs d'approche 102 peuvent être sélectionnés parmi les capteurs suivants :
- un capteur à temps de vol ou un télémètre, optique ou acoustique,
- une caméra à temps de vol (3D),
- un dispositif optique stéréoscopique et/ou à projection de lumière structurée, ou
- un dispositif d'imagerie optique.

Bien entendu, il est possible d'utiliser une combinaison quelconque des capteurs listés ci-dessus de sorte que les capteurs d'approche sont une combinaison quelconque de ces capteurs.

Suivant un mode de réalisation préférentiel, les capteurs d'approche 102 mis en œuvre peuvent être des capteurs à temps de vol (ponctuels) optiques.

Les capteurs d'approche 102 réalisent une détection d'un objet jusqu'à une distance d'au moins 50cm, voire plus, jusqu'à quelques mètres. La fréquence de détection de ces capteurs est typiquement de l'ordre d'une centaine d'Hertz.

Chaque capteur d'approche 102 a une zone de détection en forme de cône dont le sommet se trouve au niveau du capteur d'approche 102. L'angle d'ouverture du cône de chaque capteur d'approche 102 est de l'ordre de plusieurs dizaines de degrés, et en particulier de l'ordre de 50° ou 60°. Dans la mesure où ces capteurs d'approche ne peuvent pas détecter d'objets à une distance inférieure à une distance minimale (par exemple 10cm), leur zone de détection a plutôt la forme d'un cône tronqué.

Comme visible sur la FIGURE 1, à partir d'une certaine distance, les zones de détection de deux capteurs d'approche successifs/adjacents 102 se chevauchent. Cependant, il existe également entre deux capteurs d'approche consécutifs 102, une zone 106 non couverte par les capteurs d'approches 102. Si un objet se trouve dans cette zone non-couverte 106, il n'est détecté par aucun capteur d'approche 102.

Les capteurs de proximité 104 réalisent une détection d'un objet à une distance maximale de 25-30 cm. La fréquence de détection de ces capteurs est de l'ordre de 1000Hz.

Comme les capteurs de proximité 104 sont positionnés entre les capteurs d'approche 102, ils détectent les objets se trouvant dans les zones 106, qui ne sont pas couvertes par les capteurs d'approches 102.

En particulier, dans au moins une direction :
- la distance entre deux capteurs d'approche consécutifs 102, et
- le nombre de capteurs de proximité 104 disposés entre ces deux capteurs d'approche consécutifs 102 ;
sont choisis tels que la zone de détection des capteurs de proximité 104 couvre la majorité, et préférentiellement la totalité, de la zone 106, non-couverte par deux capteurs d'approche consécutifs 102.

Dans l'exemple représenté sur la FIGURE 1, chaque capteur de proximité 104 est formé par une électrode capacitive, appelée électrode de mesure dans la suite.

Chaque électrode de mesure 104 est prévue pour être polarisée à un premier potentiel électrique alternatif, différent d'un potentiel de masse, à une fréquence de travail. La détection d'un objet est réalisée en mesurant un signal relatif à la capacité, dite électrode-objet, vue par chaque électrode de mesure. Ce principe de détection est bien connu et ne sera donc pas détaillé ici.

De plus, pour éviter des capacités de fuite ou des capacités parasites pouvant constituer une perturbation, chaque électrode de mesure 104 est gardée à un potentiel électrique alternatif, dit de garde, notée V_{G}, identique au premier potentiel alternatif, à la fréquence de travail. Pour ce faire, le dispositif de détection 100 comprend une électrode de garde 108, formant un plan de garde, et commune à toutes les électrodes de mesure 104.

Suivant une réalisation alternative, il est possible d'utiliser une électrode de garde individuelle pour chaque électrode de mesure 104.

Dans l'exemple représenté sur la FIGURE 1, il existe une zone 110 au niveau de laquelle se chevauchent, les zones de détection :
- de deux capteurs d'approche 102 consécutifs, et
- des capteurs de proximité 104 disposés entre ces deux capteurs d'approche consécutifs 102.

Ainsi, il n'existe aucune zone aveugle dans laquelle un objet se trouvant à proximité du dispositif de détection n'est pas détecté.

La FIGURE 2 est une représentation schématique d'un autre exemple non limitatif du principe d'un dispositif de détection selon l'invention.

Le dispositif 200 comprend tous les éléments du dispositif 100 de la FIGURE 1, à la différence près qu'il n'y que deux capteurs de proximité 104, ou électrodes de mesure 104, entre deux capteurs d'approche 102 consécutifs.

De ce fait, comme représenté sur la FIGURE 2, la zone détection des capteurs de proximité 104 est plus petite, et vient couvrir la majorité de la zone non-couverte 106 entre deux capteurs d'approche consécutifs 102, mais pas la totalité de cette zone 106. En particulier, la zone détection des capteurs de proximité 104 ne vient pas se chevaucher avec la zone de chevauchement de deux capteurs d'approche consécutifs 102.

Par conséquent, il existe une petite zone aveugle 202 entre deux capteurs d'approche consécutifs 102 dans laquelle un objet n'est pas détecté.

Bien entendu, le dispositif 200 est moins efficace en détection que le dispositif 100 de la FIGURE 1, tout en restant suffisamment fonctionnel.

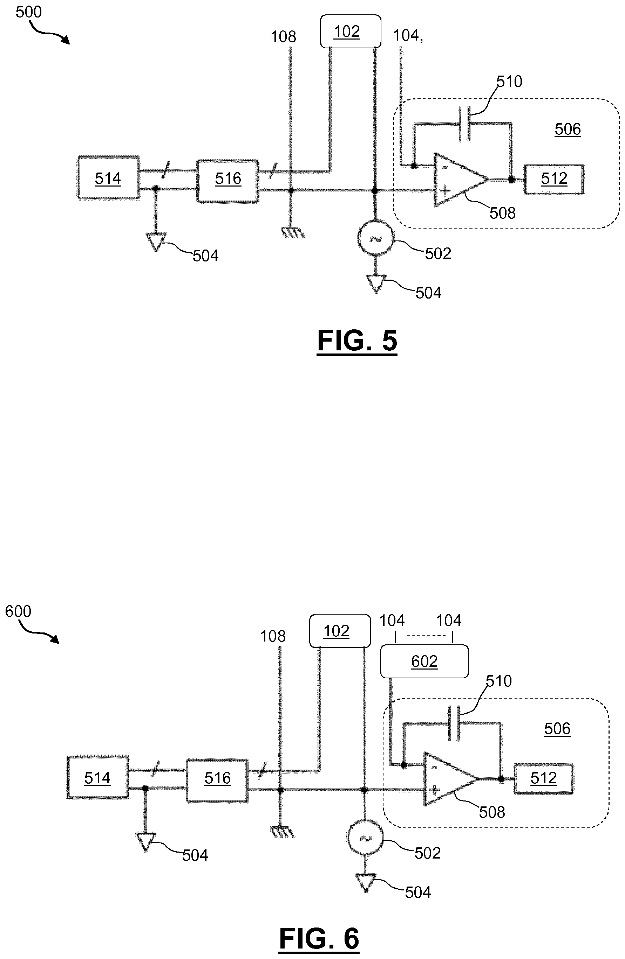

Une électronique de détection est associée au dispositif de détection. Des exemples d'électroniques de détection seront décrits dans la suite en référence aux FIGURES 5 et 6.

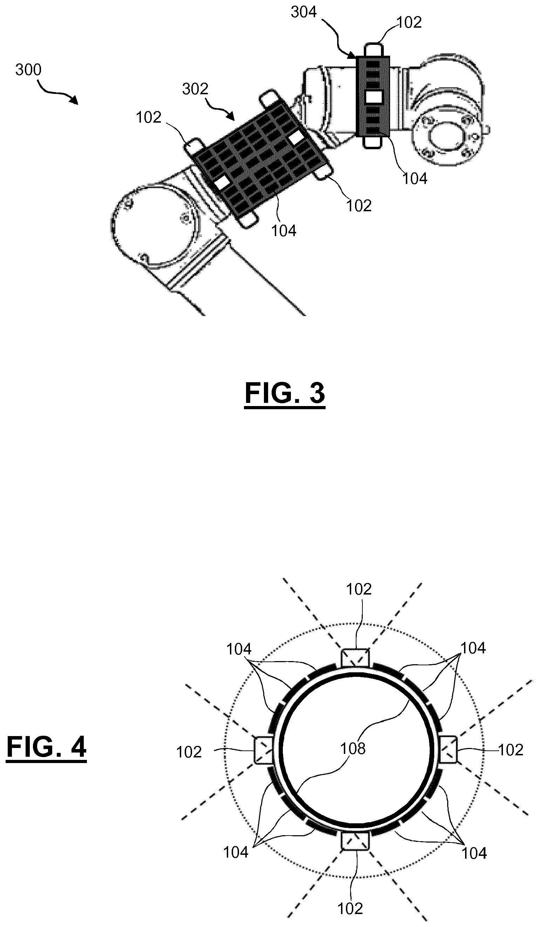

La FIGURE 3 est une représentation schématique partielle d'un exemple de réalisation non limitatif d'un robot selon l'invention.

Le robot 300, représenté sur la FIGURE 3, se présente sous la forme d'un bras robotisé comprenant plusieurs articulations reliant entre eux plusieurs segments. Chaque articulation permet de réaliser une rotation autour d'un axe de rotation.

Le robot 300 est équipé de deux dispositifs de détection 302 et 304 selon l'invention. Chaque dispositif de détection 302 et 304 peut, par exemple, être réalisé selon le principe décrit en référence à la FIGURE 1 ou à la FIGURE 2.

Tel que représenté sur la FIGURE 3, chaque dispositif de détection 302 et 304 se présente sous la forme d'un élément d'habillage, tel qu'un capot ou une peau ou encore un élément de garniture, venant se positionner au-dessus d'un capot existant du robot. Bien entendu, suivant une réalisation alternative, chaque dispositif de détection peut être intégré dans/sur un élément d'habillage existant du robot.

Le dispositif de détection 302 se présente sous la forme d'un cylindre comprenant au niveau de chacune de ses extrémités un anneau de capteurs d'approche 102 comprenant quatre capteurs d'approche 102 équidistants. Le dispositif de détection 302 comporte également une multitude de capteurs de proximité 104 distribuée sur toute la surface du cylindre et entre les capteurs d'approche 102.

Le dispositif de détection 304 se présente sous la forme d'une bande annulaire, ou un bracelet, comprenant un anneau de capteurs d'approche 102 comprenant quatre capteurs d'approche 102 équidistants. Le dispositif de détection 304 comporte également trois capteurs de proximité 104 entre deux capteurs d'approche 102 successifs.

Bien entendu, le nombre et la position des capteurs ne sont pas limitatifs.

La FIGURE 4 est une représentation schématique, en coupe, d'un dispositif de détection équipant le robot 300 de la FIGURE 3.

Le dispositif représenté sur la FIGURE 4 peut être l'un quelconque des dispositifs 302 ou 304 de la FIGURE 3.

Comme visible sur la FIGURE 4, les zones de détection de deux capteurs d'approche 102 successifs ne se chevauchent pas. Une partie de la zone non-couverte se trouvant entre deux capteurs d'approches 102 successifs est couverte par les capteurs de proximité 104 se trouvant entre ces capteurs d'approches.

On constate également que la portée en détection des capteurs de proximité 104 est beaucoup plus petite que celle des capteurs d'approche 102.

La FIGURE 5 est une représentation schématique d'un exemple d'électronique pouvant être mise en œuvre dans/avec un dispositif de détection selon l'invention.

L'électronique 500 représentée sur la FIGURE 5 peut être mise en œuvre avec le dispositif 100, 200, 302 ou 304 des FIGURES 1-4.

Dans l'exemple représenté sur la FIGURE 5, l'électronique 500 comprend un oscillateur 502, référencé à une masse générale 504, qui génère une tension alternative d'excitation, notée V_{G}, utilisée pour polariser chaque électrode de mesure 104, faisant fonction de capteur de proximité, et également utilisée comme potentiel de garde pour polariser l'électrode de garde 108.

L'électronique 500 comporte une électronique de détection 506 composée d'un amplificateur de courant, ou de charge, représenté par un amplificateur opérationnel 508 et une capacité de contre-réaction 510. Dans le mode de réalisation présenté, cet amplificateur de charge fournit en sortie une tension proportionnelle à la capacité de couplage entre l'électrode de mesure et un objet à proximité.

L'électronique de détection 506 comprend en outre un conditionneur 512 permettant d'obtenir un signal représentatif de la capacité de couplage Cₑₒ recherchée, et/ou de la présence ou de la proximité d'un objet d'un corps. Ce conditionneur 512 peut comprendre par exemple un démodulateur synchrone pour démoduler le signal par rapport à une porteuse, à une fréquence de travail. Le conditionneur 512 peut également comprendre un démodulateur asynchrone ou un détecteur d'amplitude. Ce conditionneur 512 peut bien entendu être réalisé sous une forme analogique et/ou numérique (microprocesseur) et comprendre tous moyens nécessaires de filtrage, de conversion, de traitement, etc.

Dans la configuration représentée sur la FIGURE 5, chaque électrode de mesure 104 est polarisée par l'intermédiaire de l'amplificateur opérationnel 508. En particulier, l'oscillateur 502 est relié à l'entrée positive de l'amplificateur opérationnel 508 et l'électrode de mesure est reliée à l'entrée négative de l'amplificateur opérationnel 508.

Le plan de garde formé par l'électrode garde 108 est relié à l'entrée négative de l'amplificateur opérationnel 508.

L'électronique de détection 500, ou au moins sa partie sensible avec l'amplificateur de charge 506 peut être référencée (ou alimentée par des alimentations électriques référencées) au potentiel de garde V_{G}, pour minimiser les capacités parasites.

L'électronique de détection 500 peut également être référencée, de manière plus classique, au potentiel de masse 504.

Les capteurs d'approche 102 du dispositif de détection sont alimentés/commandé par un contrôleur 514. Ce contrôleur 514 délivre des signaux (d'alimentation ou de commande) référencés au potentiel de masse générale 504, différent du potentiel de garde V_{G}.

Sans précautions, de tels signaux, et par conséquent les capteurs d'approche 102 pourrait déclencher une détection intempestive de la part de électrodes de mesure 104 utilisée comme capteur de proximité, du fait de la présence du potentiel de masse.

Pour éviter cela, l'électronique du dispositif de détection comprend un convertisseur 516 disposé entre le contrôleur 514 et le capteur d'approche 102 et ayant pour fonction de :
- recevoir au moins un signal électrique, dit d'entrée, tel qu'un signal d'alimentation ou de commande, émis par le contrôleur 514 et destiné au capteur d'approche 102, et référencer ledit signal d'entrée au potentiel de garde V_{G} ; et
- recevoir au moins un signal électrique, dit de sortie, émis par ledit capteur d'approche 102 et destiné au contrôleur 514, et référencer ledit signal de sortie au potentiel de masse électrique 504 dudit contrôleur 514.

Ainsi, chaque capteur d'approche, ainsi que les connecteurs et l'électronique qui lui sont associés sont alimentés par des signaux référencés au potentiel de garde V_{G} et ne perturbent pas l'électrode de de mesure 104.

La FIGURE 6 est une représentation schématique d'un autre exemple d'électronique pouvant être mise en œuvre dans/avec un dispositif de détection selon l'invention.

L'électronique 600, représentée sur la FIGURE 6, peut être mise en œuvre avec le dispositif 100, 200, 302 ou 304 des FIGURES 1-4.

L'électronique 600 comprend tous les éléments de l'électronique 500 de la FIGURE 5.

L'électronique 600 comprend en outre un moyen de scrutation 602, qui peut être par exemple un switch, permettant de connecter, à tour de rôle, chaque électrode de mesure 104 à l'électronique de détection 506. Cette architecture présente l'avantage d'utiliser une électronique de détection commune à plusieurs électrodes de mesure.

Bien entendu, les électroniques 500, 600 peuvent également comprendre des moyens de scrutation (non représentés) pour contrôler et/ou interroger séquentiellement des capteurs d'approche 102.

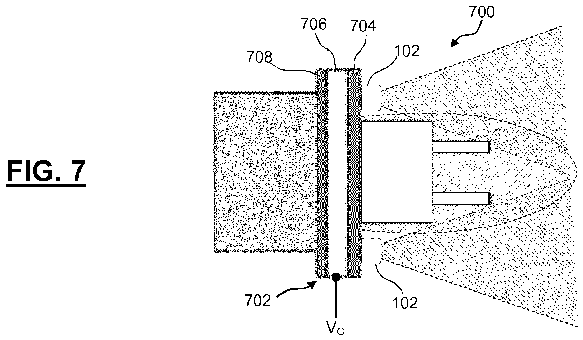

La FIGURE 7 est une représentation schématique d'un exemple de réalisation non limitatif d'une tête fonctionnelle pouvant être mise en œuvre dans un robot selon l'invention.

La tête fonctionnelle 700, représentée sur la FIGURE 7, se présente sous la forme d'un outil ou d'un porte-outil. En particulier, la tête fonctionnelle 700 est une pince motorisée.

La tête fonctionnelle 700 comporte, ou est associée à, une interface de séparation 702, qui la sépare du reste du robot. Cette interface de séparation 702 comprend au moins un isolant électrique 704 qui isole électriquement la tête fonctionnelle 700 du reste du robot.

De manière optionnelle, l'interface de séparation 702 comprend un plan de garde formée par une plaque conductrice 706, séparée de la tête fonctionnelle 700 par l'isolant 704, et séparée du reste du robot par un deuxième isolant 708.

La plaque conductrice 706 est polarisée au potentiel de garde V_{G}. La tête fonctionnelle 700, elle, est polarisée au premier potentiel électrique alternatif qui est identique au potentiel de garde V_{G}.

Dans ces conditions, la tête fonctionnelle 700 se comporte comme une électrode capacitive, ou une électrode de mesure, au même titre que les électrodes de mesure 104 des FIGURES 1-4. Par conséquent, la tête fonctionnelle 700 peut être utilisée comme capteur de proximité, au même titre que chaque électrode de mesure 104.

De plus, la tête fonctionnelle 700 comporte un ou plusieurs capteurs d'approche 102. Sur la FIGURE 7, deux capteurs d'approches 102 sont visibles. Ainsi, la tête fonctionnelle 700 peut être utilisée comme dispositif de détection selon l'invention pour réaliser une détection d'objets au même titre que les dispositifs de détection 100, 200, 302 et 304 des FIGURES 1-4. Les capteurs d'approche 102 de la tête fonctionnelle 700 réalisent une détection d'un objet lorsque celui se trouve éloigné de la tête fonctionnelle 700, et le reste de la tête fonctionnelle 700 réalise une détection d'un objet lorsque celui-ci trouve près de la tête fonctionnelle 700, et en particulier, dans une zone non-couverte par les capteurs d'approche 102.

Les capteurs d'approche 102 sont particulièrement utiles avec une tête fonctionnelle 700 utilisée comme électrode capacitive car ils apportent une information de la direction dans laquelle un objet arrive, qui n'est pas fournie par l'électrode capacitive dans ce cas. Ainsi, si l'objet est détecté par un capteur d'approche 102, une trajectoire d'évitement peut être effectuée. Par contre, si l'objet approche dans une zone qui n'est pas couverte par les capteurs d'approche 102, il est quand même détecté par l'électrode capacitive à temps pour arrêter le robot et éviter une collision.

Les signaux échangés avec les capteurs d'approche 102 équipant la tête fonctionnelle peuvent être convertis à l'aide d'un convertisseur de potentiel, tel que par exemple le convertisseur de potentiel 516 des FIGURES 5 et 6. Ainsi, les capteurs d'approche 102 ne viennent pas perturber la détection capacitive réalisée par la tête fonctionnelle 700 ou une autre électrode de mesure 104 équipant le robot.

De plus, lorsque la tête fonctionnelle 700 comporte un organe électrique, tel que par exemple un moteur électrique ou d'autres capteurs, les signaux échangés avec ledit organe électrique peuvent être convertis à l'aide d'un convertisseur de potentiel, tel que par exemple le convertisseur de potentiel 516 des FIGURES 5 et 6, d'une manière similaire ou identique aux capteurs d'approche 102. Ainsi, cet organe électrique ne vient pas perturber la détection capacitive réalisée par la tête fonctionnelle 700 ou une autre électrode de mesure 104 équipant le robot.

Bien sûr, l'invention n'est pas limitée aux exemples qui viennent d'être décrits et de nombreux aménagements peuvent être apportés à ces exemples sans sortir du cadre de l'invention tel que défini par les revendications.

## Revendications

1. Dispositif (100;200;300,304) de détection d'objets pour un robot (300), prévu pour équiper ledit robot (300), comprenant :
- au moins un capteur (102), dit d'approche, mettant en œuvre une première technologie de détection pour détecter un objet environnant ; et
- au moins un capteur (104,700), dit de proximité, mettant en œuvre une deuxième technologie de détection pour détecter un objet environnant, différente de ladite première technologie, et de portée inférieure à la portée dudit au moins un capteur d'approche (102) ;
au moins un capteur de proximité (104,700) est un capteur capacitif comprenant au moins une électrode de mesure (104,700) polarisée à un premier potentiel électrique alternatif différent d'un potentiel de masse générale (504), à une fréquence de travail ;
**caractérisé en ce qu'**au moins un capteur d'approche (102) est référencé à un potentiel électrique alternatif (V_{G}), dit de garde, identique ou sensiblement identique au premier potentiel, à la fréquence de travail.

2. Dispositif (100;200;300,304) selon la revendication 1, **caractérisé en ce qu'**au moins un capteur d'approche (102) réalise une détection d'un objet jusqu'à une distance au moins égale à 30cm, en particulier jusqu'à une distance au moins égale à 50cm.

3. Dispositif (100;200;300,304) selon l'une quelconque des revendications précédentes, **caractérisé en ce qu'**au moins un capteur d'approche (102) est formé par :
- un capteur à temps de vol ou un télémètre, optique ou acoustique,
- une caméra à temps de vol (3D),
- un dispositif optique stéréoscopique et/ou à projection de lumière structurée, ou
- un dispositif d'imagerie optique.

4. Dispositif (100;200;300,304) selon l'une quelconque des revendications précédentes, **caractérisé en ce qu'**au moins un capteur de proximité (104,700) réalise une détection d'un objet jusqu'à une distance au moins égale à 10 cm.

5. Dispositif (100;200;300,304) selon l'une quelconque des revendications précédentes, **caractérisé en ce qu'**il comprend une électrode (108,706), ou une surface, dite de garde, pour garder au moins une électrode de mesure (104,700), et polarisée à un potentiel électrique alternatif (V_{G}), dit de garde, identique ou sensiblement identique au premier potentiel, à la fréquence de travail.

6. Dispositif (100;200;300,304) selon l'une quelconque des revendications précédentes, **caractérisé en ce qu'**au moins un, ou un ensemble de plusieurs, capteur(s) de proximité (104) est positionné entre au moins deux capteurs d'approche (102) de sorte que sa zone de détection couvre une zone non-couverte par lesdits capteurs d'approche (102).

7. Dispositif (100;200;300,304) selon l'une quelconque des revendications précédentes, **caractérisé en ce qu'**au moins un capteur d'approche (102) est positionné de sorte que sa zone de détection se chevauche, au moins partiellement, avec une zone de détection d'un, ou d'un ensemble de plusieurs, capteur(s) de proximité (104).

8. Dispositif (100;200;300,304) selon l'une quelconque des revendications précédentes, **caractérisé en ce qu'**au moins deux capteurs d'approche (102) sont positionnés de sorte que leurs zones de détection se chevauchent, au moins partiellement, entre elles.

9. Elément d'habillage pour robot équipé d'au moins un dispositif de détection (100;200;300,304) selon l'une quelconque des revendications précédentes.

10. Robot (300) équipé :
- d'au moins un dispositif de détection (302,304) selon l'une quelconque des revendications 1 à 8 ; et/ou
- d'un élément d'habillage selon la revendication 9.

11. Robot (300) selon la revendication précédente, **caractérisé en ce qu'**il comprend, pour au moins un segment dudit robot :
- une pluralité de capteurs de proximité (102), distribués sur ledit segment du robot, et
- une pluralité de capteurs d'approche (104) disposés au niveau d'au moins une, en particulier de chacune des extrémités dudit segment.

12. Robot (300) selon l'une quelconque des revendications 10 ou 11, **caractérisé en ce qu'**il comprend une tête fonctionnelle (700), formant un outil ou un porte-outil, utilisée comme électrode de détection capacitive, ladite tête fonctionnelle (700) :
- formant un capteur de proximité capacitif, et
- comprenant au moins un capteur d'approche (102), en particulier plusieurs capteurs d'approche (102) disposés de part et d'autre de ladite tête fonctionnelle (700).

13. Procédé de contrôle de trajectoire pour un robot (300) selon l'une quelconque des revendications 10 à 12 comprenant une étape de génération, ou de modification, d'une trajectoire d'au moins une partie dudit robot en fonction
- d'au moins un signal fourni par au moins un capteur d'approche (102),
- d'au moins un signal fourni par au moins un capteur de proximité (104).

## Patentansprüche

1. Vorrichtung (100; 200; 300, 304) zur Erkennung von Gegenständen für einen Roboter (300), zur Ausstattung des Roboters (300) vorgesehen und umfassend:
- mindestens einen sogenannten Näherungssensor (102), welcher eine erste Erkennungstechnologie zur Erkennung eines Gegenstandes in der Umgebung umsetzt; und
- mindestens einen sogenannten Nähesensor (104, 700), der eine zweite Erkennungstechnologie zur Erkennung eines Gegenstandes in der Umgebung umsetzt, welche von der ersten Technologie abweicht und eine kleinere Tragweite als die Tragweite des mindestens einen Näherungssensors (102) hat;
mindestens ein Nähesensor (104, 700) ist ein kapazitiver Sensor, der mindestens eine Messelektrode (104, 700) umfasst, welche mit einem ersten, von einem allgemeinen Massepotential (504) abweichenden, elektrischen Wechselpotential bei einer Arbeitsfrequenz polarisiert ist;
**dadurch gekennzeichnet, dass** wenigstens ein Näherungssensor (102) auf ein elektrisches, sogenanntes Schutz-Wechselpotential (V_{G}) bei der Arbeitsfrequenz eingestellt ist, das dem ersten Potential gleich oder im Wesentlichen gleich ist.

2. Vorrichtung (100; 200; 300, 304) nach Anspruch 1, **dadurch gekennzeichnet, dass** wenigstens ein Näherungssensor (102) eine Erkennung eines Gegenstandes bis zu einer Entfernung von mindestens 30 cm, insbesondere bis zu einer Entfernung von mindestens 50 cm ausführt.

3. Vorrichtung (100; 200; 300, 304) nach einem der vorhergehenden Ansprüche, **dadurch gekennzeichnet, dass** mindestens ein Näherungssensor (102) ausgebildet ist durch:
- einen TOF-Sensor oder einen optischen oder akustischen Entfernungsmesser,
- eine (3D) TOF-Kamera,
- eine optische Stereovorrichtung und/oder zur strukturierten Lichtprojektion, oder
- eine optische Bildgebungsvorrichtung.

4. Vorrichtung (100; 200; 300, 304) nach einem der vorhergehenden Ansprüche, **dadurch gekennzeichnet, dass** wenigstens ein Nähesensor (104, 700) eine Erkennung eines Gegenstandes bis zu einer Entfernung von mindestens 10 cm ausführt.

5. Vorrichtung (100; 200; 300, 304) nach einem der vorhergehenden Ansprüche, **dadurch gekennzeichnet, dass** sie eine sogenannte Schutzelektrode (108, 706) oder eine sogenannte Schutzfläche zum Schutz mindestens einer Messelektrode (104, 700) umfasst, welche auf ein elektrisches, sogenanntes Schutz-Wechselpotential (VG) bei der Arbeitsfrequenz eingestellt ist, welches dem ersten Potential gleich oder im Wesentlichen gleich ist.

6. Vorrichtung (100; 200; 300, 304) nach einem der vorhergehenden Ansprüche, **dadurch gekennzeichnet, dass** wenigstens ein Nähesensor (104) oder eine Gruppe von mehreren Nähesensoren (104) zwischen mindestens zwei Näherungssensoren (102) derart angeordnet ist, dass sein Erkennungsbereich einen durch die Näherungssensoren (102) nicht gedeckten Bereich deckt.

7. Vorrichtung (100; 200; 300, 304) nach einem der vorhergehenden Ansprüche, **dadurch gekennzeichnet, dass** mindestens ein Näherungssensor (102) derart angeordnet ist, dass sein Erkennungsbereich sich mindestens teilweise mit einem Erkennungsbereich eines Nähesensors oder einer Gruppe von mehreren Nähesensoren (104) überlappt.

8. Vorrichtung (100; 200; 300, 304) nach einem der vorhergehenden Ansprüche, **dadurch gekennzeichnet, dass** wenigstens zwei Nähesensoren (102) derart angeordnet sind, dass sich ihre Erkennungsbereiche wenigstens teilweise untereinander überlappen.

9. Verkleidungselement für einen mit mindestens einer Erkennungsvorrichtung (100; 200; 300, 304) nach einem der vorhergehenden Ansprüche ausgestatteten Roboter.

10. Roboter (300), ausgestattet mit:
- mindestens einer Erkennungsvorrichtung (302, 304) nach einem der Ansprüche 1 bis 8; und/oder
- einem Verkleidungselement nach Anspruch 9.

11. Roboter (300) nach dem vorhergehenden Anspruch, **dadurch gekennzeichnet, dass** er für mindestens einen Abschnitt des Roboters umfasst:
- eine Vielzahl von Nähesensoren (102), welche auf dem Abschnitt des Roboters verteilt sind, und
- eine Vielzahl von Näherungssensoren (104), welche an mindestens einem, insbesondere an jedem der Enden des Abschnitts angeordnet sind.

12. Roboter (300) nach einem der Ansprüche 10 oder 11, **dadurch gekennzeichnet, dass** er einen Funktionskopf (700) umfasst, der ein Werkzeug oder ein Werkzeugträger bildet und als kapazitive Erkennungselektrode verwendet wird, wobei der Funktionskopf (700):
- einen kapazitiven Nähesensor bildet, und
- mindestens einen Näherungssensor (102), insbesondere mehrere Näherungssensoren (102) umfasst, welche beidseitig des Funktionskopfes (700) gelagert sind.

13. Verfahren zur Bahnsteuerung für einen Roboter (300) nach einem der Ansprüche 10 bis 12, umfassend einen Schritt der Erzeugung oder der Änderung einer Bewegungsbahn mindestens eines Teils des Roboters in Abhängigkeit von
- mindestens einem durch mindestens einen Nähesensor (102) gelieferten Signal,
- mindestens einem durch mindestens einen Näherungssensor (104) gelieferten Signal.

## Claims

1. Device (100;200;300,304) for the detection of objects for a robot (300), provided for equipping said robot (300), comprising:
- at least one sensor (102), called approach sensor, implementing a first detection technology for detecting a neighbouring object; and
- at least one sensor (104,700), called proximity sensor, implementing a second detection technology for detecting a neighbouring object, different from said first technology and having a range less than the range of said at least one approach sensor (102);
at least one proximity sensor (104,700) is a capacitive sensor comprising at least one measurement electrode (104,700) polarized at a first alternating electric potential different from a general ground potential (504), at a working frequency;
**characterized in that** at least one approach sensor (102) is referenced to an alternating electric potential (V_{G}), called guard potential, that is identical or substantially identical to the first potential, at the working frequency.

2. Device (100;200;300,304) according to claim 1, **characterized in that** at least one approach sensor (102) carries out detection of an object up to a distance at least equal to 30 cm, in particular up to a distance at least equal to 50 cm.

3. Device (100;200;300,304) according to any one of the preceding claims, **characterized in that** at least one approach sensor (102) is formed by:
- a time-of-flight sensor or a range-finder, optical or acoustic,
- a time-of-flight camera (3D),
- a stereoscopic optical device and/or structured light projection device, or
- an optical imaging device.

4. Device (100;200;300,304) according to any one of the preceding claims, **characterized in that** at least one proximity sensor (104,700) carries out detection of an object up to a distance at least equal to 10 cm.

5. Device (100;200;300,304) according to any one of the preceding claims, **characterized in that** it comprises an electrode (108, 706), or a surface, called guard electrode or guard surface, for guarding at least one measurement electrode (104,700), and polarized at an alternating electric potential (V_{G}), called guard potential, that is identical or substantially identical to the first potential, at the working frequency.

6. Device (100;200;300,304) according to any one of the preceding claims, **characterized in that** at least one, or a set of several, proximity sensor(s) (104) is positioned between at least two approach sensors (102) so that the detection zone thereof covers a zone that is not covered by said approach sensors (102).

7. Device (100;200;300,304) according to any one of the preceding claims, **characterized in that** at least one approach sensor (102) is positioned so that the detection zone thereof overlays, at least partially, a detection zone of one, or a set of several, proximity sensor(s) (104).

8. Device (100;200;300,304) according to any one of the preceding claims, **characterized in that** at least two approach sensors (102) are positioned so that the detection zones thereof at least partially overlay one another.

9. Trim element for a robot, equipped with at least one detection device (100;200;300,304) according to any one of the preceding claims.

10. Robot (300) equipped with:
- at least one detection device (302,304) according to any one of claims 1 to 8; and/or
- a trim element according to claim 9.

11. Robot (300) according to the preceding claim, **characterized in that** it comprises, for at least one segment of said robot:
- a plurality of proximity sensors (102), distributed over said segment of the robot, and
- a plurality of approach sensors (104), arranged at the level of at least one, and in particular each, of the ends of said segment.

12. Robot (300) according to any one of claims 10 or 11, **characterized in that** it comprises a functional head (700), forming a tool or a tool-holder, used as capacitive detection electrode, said functional head (700):
- forming a capacitive proximity sensor, and
- comprising at least one approach sensor (102), in particular several approach sensors (102), arranged on either side of said functional head (700).

13. Method of path control for a robot (300) according to any one of claims 10 to 12 comprising a step of generating, or modifying, a path of at least one part of said robot as a function of:
- at least one signal supplied by at least one approach sensor (102),
- at least one signal supplied by at least one proximity sensor (104).
